# EUROPEAN PATENT APPLICATION

(11) **EP 2 150 060 A1**
(43) Date of publication of application: **03.02.2010**
(21) Application number: 08290814.6
(22) Date of filing: 28.07.2008
(51) Int. Cl.: H04N 7/24

(54) **Method and arrangement for video encoding**

(71) Applicant: Alcatel Lucent, 75008 Paris (FR)
(72) Inventor: Macq Jean-Francois, 1083 Ganshoren (BE)
(74) Representative: Vandenbroeck, Josiane Anne Marie

(57) **Abstract**

A method for encoding video data includes a step of selecting between inter-prediction and intra-prediction mode, whereby, if inter-prediction mode is selected, said method further includes a further step of sorting at least one type of inter-prediction macroblocks into different categories, in accordance with a predetermined criterion, and a step of arranging all macroblocks of said at least one type and pertaining to the same category into one slice group, thereby creating a set of slice groups for this type of interprediction macroblocks.

## Description

The present invention relates to a method for video encoding, in accordance with the preamble of claim 1.

Encoding of multimedia streams such as audio or video streams has been extensively described in the literature and is standardized by means of several standards. The H.264/AVC video coding standard in particular describes advanced compression techniques that were developed to enable transmission of video or audio signals at a lower bit rate. This standard defines the syntax of the encoded video bitstream along with a method of decoding the bitstream. Each video frame is thereby subdivided and encoded at the macroblock level, where each macroblock is a 16x16 block of pixels.

Macroblocks can be grouped together in slices to allow parallelization or error resilience. For each macroblock, the coded bitstream contains, firstly, data which signal to the decoder how to compute a prediction of that macroblock based on already decoded macroblocks and, secondly, residual data which are decoded and added to the prediction to re-construct the macroblock pixel values. Each macroblock is either encoded in "intra-prediction" mode in which the prediction of the macroblock is formed based on reconstructed macroblocks in the current slice, or "inter-prediction" mode in which the prediction of the macroblock is formed based on blocks of pixels in already decoded frames, called reference frames. The intra-prediction coding mode applies spatial prediction within the current slice in which the encoded macroblock is predicted from neighbouring samples in the current slice that have been previously encoded, decoded and reconstructed. A macroblock coded in intra-prediction mode is called an I-type macroblock. The inter-prediction coding mode is based on temporal prediction in which the encoded macroblock is predicted from samples in previous and/or future reference frames. A macroblock coded in inter-prediction mode can either be a P-type macroblock if each sub-block is predicted from a single reference frame, or a B-type macroblock if each sub-block is predicted from one or two reference frames.

The default H.264 behaviour is to group macroblocks in raster-scan order (i.e. scanning lines from left to right) into slices. The H.264 standard however further introduced another ability, referred to as flexible macroblock ordering, hereafter abbreviated with FMO. FMO partitions a video frame into multiple slice groups, where each slice group contains a set of macroblocks which could potentially be in nonconsecutive positions and could be anywhere in a frame.

For transport each slice can be transported within one network abstraction layer, hereafter abbreviated by NAL, unit, using default mode. However the H.264/AVC standard further describes an additional feature of data partitioning of each slice over several NAL units, to improve the error resilience during the transport of the slice.

According to this feature of data partitioning of one slice over several Partitions, the encoded contents of one slice will be distributed over 3 NAL units: a NAL unit partition A, a NAL unit partition B, and a NAL unit partition C. According to the standard, the NAL unit partition A will contain the slice header and header data for each macroblock within the slice, including intra-prediction mode, resp. motion vectors, for intra-coded, resp. inter-coded, macroblocks. The NAL unit partition B will contain the intracoded residual data of the macroblocks of the slice under consideration, if intra prediction coding was used, and the NAL unit partition C will contain the intercoded residual data, if this type of coding was used.

These NAL units are further encapsulated into packets, for transport over a network towards a receiver containing a decoder for decoding the received packets again so as to allow the original frames to be reconstructed for display or provided to a user.

In case of congestion or overload conditions in the network or in the receiving buffers several papers in literature such as the one written by S. Mys, P. Lambert, W. De Neve, P. Verhoeve, and R. Van de Walle, "SNR Scalability in H.264/AVC using Data Partitioning", Lectures Notes in Computer Science. Advances in Multimedia Information Processing, vol. 4261, pp. 329-338, 2006, have proposed to discard the NAL units partition C. In order to limit the loss of video quality which inevitably results from discarding some NAL units, these papers propose to randomly allocate an extra predetermined amount of I-type macroblocks within the slice for which the NAL unit partition C is to be discarded. However this results in inefficient coding.

An object of the present invention is therefore to provide a method of the above known kind, but which is adapted to solve the problems related to the prior art methods.

According to the invention this object is achieved by the steps of classifying at least one type of inter-coded macroblock into several categories, and grouping these macroblocks into several slice groups, each slice group being in accordance with these respective categories of inter-coded macroblocks.

In this way, for the intercoded -type macroblocks, for instance the P-type macroblocks, a set of different categories of P-type slice groups is created. During encapsulation, the coded data of each of the slices of the groups of the set is split into a partition A and a partition C, according to the data partitioning principle described above. By for instance discarding only partition C, of the least important macroblocks, as arranged in one or more slice groups of the least important categories of this set, a more error robust and quality prone transmission will result.

The present invention relates as well to an encoding apparatus for performing the subject method.

Further embodiments are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

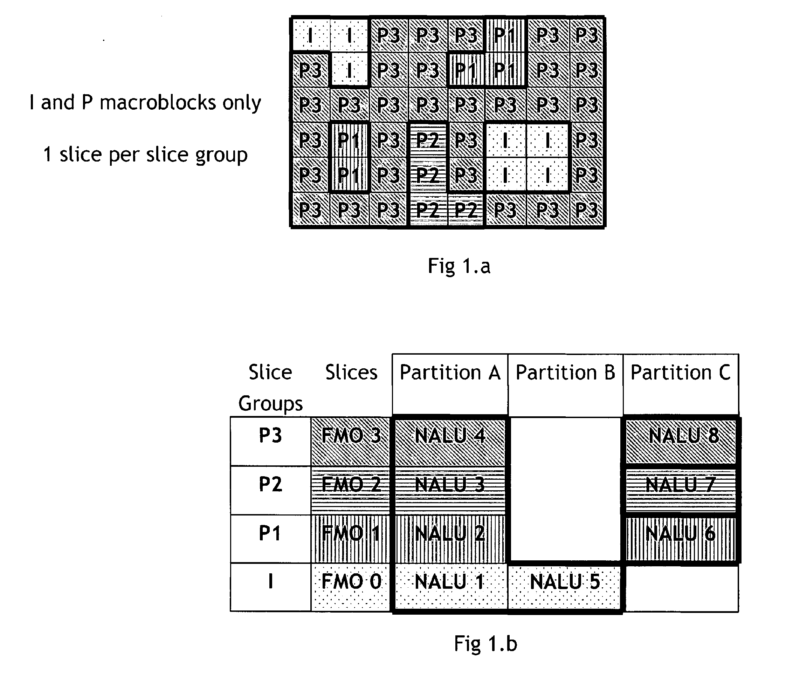

The above and other objects and features of the invention will become more apparent and the invention itself will be best understood by referring to the following description of an embodiment taken in conjunction with the accompanying drawings wherein
Figure 1a schematically shows an example of a frame with the method explained for the P-type macroblocks,
Fig. 1 b further explains the data partitioning in accordance with the method for the frame of Fig. 1 a,
Figure 2a schematically shows an example of a frame with the method explained for the B-type macroblocks,
Fig. 2b further explains the data partitioning in accordance with the method for the frame of Fig. 2a.
Figure 3a schematically shows an example of a frame with the method explained for both B and P-type macroblocks,
Fig. 3b further explains the data partitioning in accordance with the method for the frame of Fig. 3a,
Figure 4a schematically shows an example of a frame with the method explained for both B and P-type macroblocks allowed in the same slice group,
Fig. 4b further explains the data partitioning in accordance with the method for the frame of Fig. 4a, and
Figure 5a schematically shows an example of a frame with the method explained for the P-type macroblocks, with several slice groups within one category and,
Fig. 5b further explains the data partitioning in accordance with the method for the frame of Fig. 5a.

It is to be remarked that the following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The present invention will be explained by means of an example where the initial coding is following the H.264/AVC standard. However any type of coding which utilizes the underlying principles can be used for realizing embodiments related to the present invention.

More in particular, an embodiment of the method according to the present invention relates to the way the grouping of macroblocks into slice groups is done. To this purpose an additional step to an encoding algorithm is added such that, once the algorithm has decided for each macroblock, whether it will be intra-coded or intercoded, it will add an extra step for part or for all the macroblocks which will be intercoded. In accordance to the main MPEG standards, the macroblocks which will be intra-coded are called I-macroblocks .For the others, the inter-coded macroblocks, a distinction between P-type and B-type macroblocks can be made, depending on the particular encoding algorithm. An encoder determines for each macroblock which type it is.

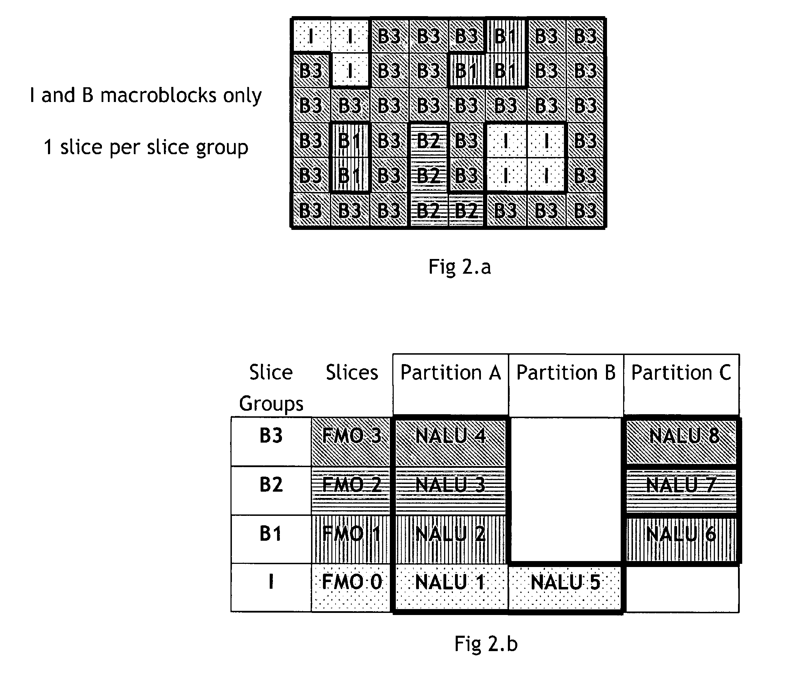

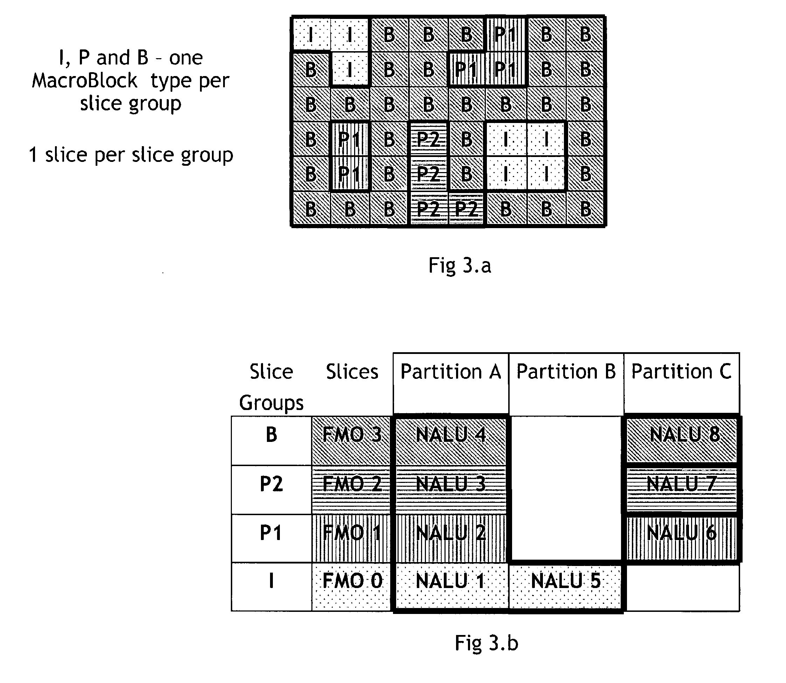

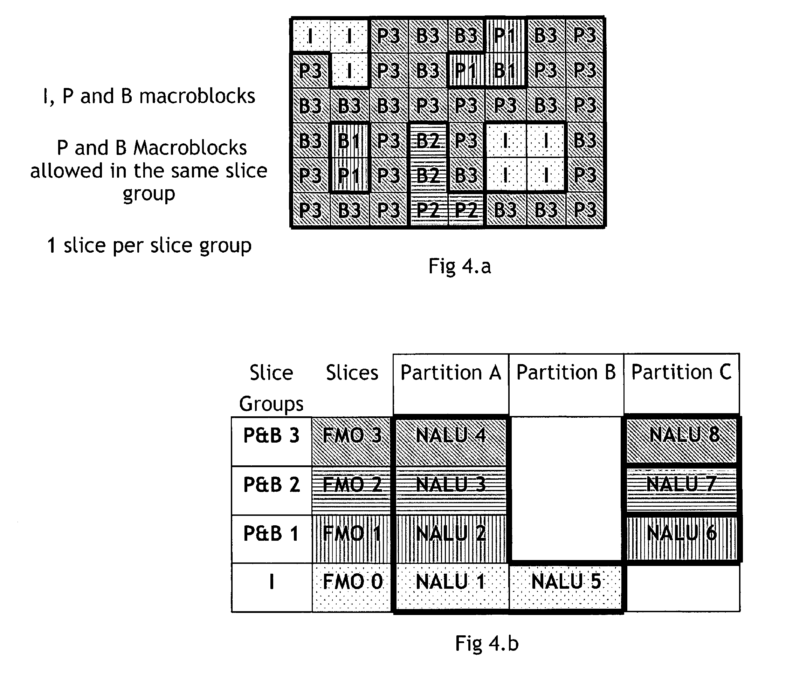

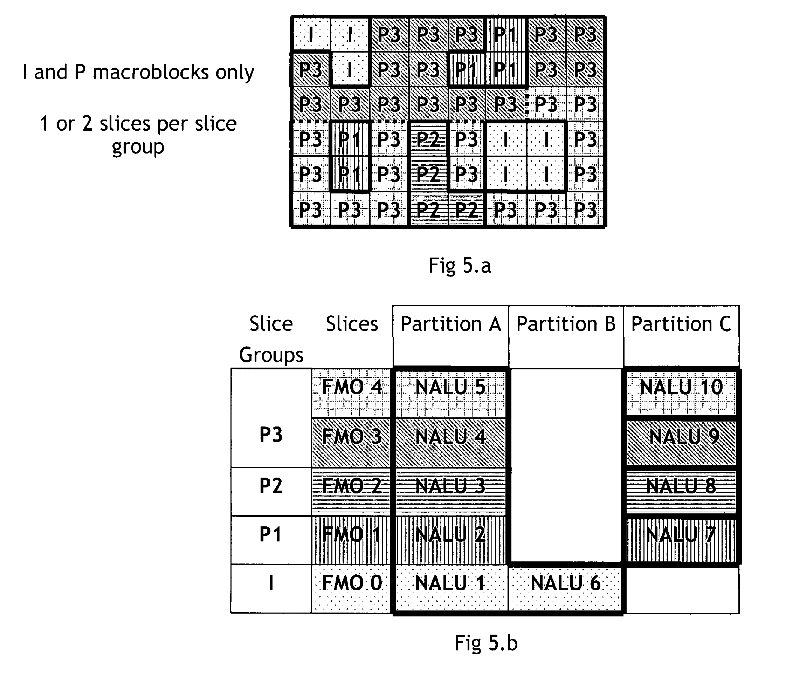

In an embodiment of the invention only the P-type macroblocks are further classified, such as for instance depicted in Figs 1a-b and 5a-b. In another embodiment of the invention, only the B-type macroblocks are further classified, such as for instance depicted in Figs 2a-b, whereas in yet another embodiment of the invention both the P and the B-type macroblocks are further sorted in accordance to a predetermined criterion, such as depicted in Figs 3a-b. In yet another embodiment both the P and B-type macroblocks are sorted, irrespective of them being a B or P-type, so without making any initial distinction with respect to their being either B or P type, such as depicted in Figs 4a-b.

We will first describe the first embodiment where only the P-type macroblocks are sorted, by referring to figures 1 a and b.

Sorting or classifying of P-type or any type of inter-coded macroblocks can be done based on their size and/or based on their importance for the reconstruction of video data at the decoder side. However still other ways of classifying such inter-coded macroblocks are possible.

A first possibility to classify the macroblocks is to consider the size of their residual data. For instance, this can be done either, in the pixel domain, by adding up the differences between the macroblock pixel values, being integer values between 1 and 256, and their prediction. Another example can consist of looking, in the compressed domain, at the size (in bits) of the quantized and entropy coded transform coefficients of the residual. The macroblocks having the largest size will be classified as the more important ones; the macroblocks with the smallest size as the least important ones.

A second possibility is to estimate the importance, e.g. by evaluating what the impact of losing the macroblock residual data would be on the visual quality of the reconstructed video at the decoding side. The decrease in quality due to the absence of the macroblock residual data can be quantified using any video quality metric. For instance, in a basic embodiment, this metric may be the Peak Signal-to-Noise Ratio (PSNR) between the original video and the one reconstructed at the decoding side. The classification of macroblocks according to the visual importance of their residual data can be further improved by using other video quality metrics, taking more aspects of the Human Visual System into account (for instance VQM, PEVQ or SSIM-based metric). It is evident that important macroblocks may then be sorted into a class of higher (or more important) category than less important macroblocks, which will be classified into a class of lower category.

In yet other embodiments, the sorting procedure could also take into account the temporal and spatial dependencies between macroblocks in order to evaluate the impact of missing residual data of a macroblock. The procedure thus takes into account all macroblocks which, via intra- or inter-prediction, directly or indirectly reference to the macroblock to be sorted. Using a video quality metric (for instance one of the metrics mentioned above), the procedure then measure what is the global impact on the video quality of removing that particular macroblock from the bitstream.

After the sorting steps described above, the macroblocks can be classified into different categories based on some predefined thresholds on related to their size, to the importance of their residual data, or to other of the above mentioned criteria as defined by the sorting method chosen. In more computationally complex embodiments, the classification could be based on directly evaluating various classification choices by measuring the impact of the simultaneous loss of various sets of macroblocks on the quality of the decoded video, using a video quality metric (for instance one of the metrics mentioned above).

A possible result of the sorting/classification is shown on Fig. 1a. In this simplified figure, a simplified frame is shown, including 7 I-type macroblocks and 41 P-type macroblocks. In this embodiment, the 41 macroblocks are further classified into 3 subcategories, denoted P1, P2 and P3, as indicated by means of the different grey colours and indications in the blocks. For the P1 category, 5 macroblocks are present, for the P2 category 4 macroblocks are present. The remaining 32 macroblocks are of the P3 type. In this example the P1 macroblocks are considered as the more important macroblocks, and the P3 macroblocks are considered as the least important macroblocks, in accordance with one of the criteria explained above.

Slice grouping is now based upon the subcategory of macroblocks, i.e. the 7 I-type macroblocks will be grouped into the I-slice-group, consisting of slice FMO 0, the 5 P1 type macroblocks into the P1-slice-group, consisting of slice FMO1, the 4 P2 macroblocks into the P2-slice-group, consisting of slice FMO2 and the 32 P3 type macroblocks into the P3-slice-group, consisting of slice FMO3.

A consequence of this grouping is that for the I-slice-group only partition A and B are present, as already known by the standard, for the other P-type slice-groups comprising slices FMO1 to FMO3 only partitions A and C are present.

This is schematically shown in Fig. 1 b, indicating FMO3 as the slice including the P3 type macroblocks, FMO2 as the slice including the P2 type macroblocks, FMO1 as the slice including the P1 type macroblocks and FMO0 as the slice including the I-type macroblocks. This grouping of macroblocks in nonconsecutive positions into 1 slice is possible by means of the flexible macroblock possibility as offered by the H.264/AVC standard.

By now further applying data partitioning to the different slices of the slice groups, a set of 8 NAL-unit partitions results: one (NALU1) for partition A, slice FMO0, a second one (NALU2) for partition A, slice FMO1, a third one (NALU3) for partition A, slice FMO2, a fourth one (NALU4) for partition A, slice FMO3, a fifth one (NALU5) for partition B, slice FMO0, a sixth one (NALU6) for partition C, slice FMO1, a seventh one (NALU7) for partition C, slice FMO2 and an eighth one (NALU8) for partition C, slice FMO3. These are schematically indicated as such on Fig. 1 b.

During overload traffic conditions during transmission of all 8 NAL units over a communications network, a NAL unit partition discarding mechanism may be implemented either at the transmitter or in an intermediate node, which can for instance consist of systematically discarding Partition C, FMO3 NAL units, as they related to the P3 macroblocks, being considered as less important ones. However other discarding mechanisms can be used, but using some predetermined criterion which is linked to the classification criterion. In the example depicted in Fig. 1 b for instance only NAL unit 8 can be discarded. This then corresponds to the partition C of the slice FMO3. In an other example (for instance discarding NAL units 7 and 8), it consisted of discarding the partition C of slice FMO2, and 3.

Similar principles can be applied to the B-type frames, as explained in figure 2a and 2b. Also an embodiment where these principles are applied to both B and P type macroblocks is possible, as depicted in figure 3a and 3b. In this figure the P-type macroblocks are classified into two slice groups, whereas the B type macroblocks are not further classified. In this example, NALU 7 may then be an appropriate choice for discarding.

Also a more general mechanism where even no first distinction is made between B and P type macroblocks, but where they are immediately classified in accordance to the criteria as explained before is possible. An example for this is shown in Figs 4a-b. Therein both P and B macroblocks are classified into 3 identical categories, and accordingly grouped into one common slice group for each of the 3 categories. On Fig. 4b these slice groups are denoted P&B1, P&B2 and P&B3 respectively. Grouping P and B macroblocks in the same slice is actually not allowed by the current H.264/AVC syntax, but can potentially be allowed in other or future video coding standards.

For the sake of simplicity, it is assumed in the previous examples that each slice group is made of a single slice. But some additional constraints might require to subdivide each slice group into several slices. Such constraints can for instance be limitations on the memory or processing capabilities of the encoding or decoding devices, which put an upper bound on the size of a slice. If a given slice group is larger than the maximal slice size, the H.264/AVC standard assumes the creation of several slices made of macroblocks taken in raster-scan order within that slice group. For instance in figure 5a, supposing that the maximal slice size is 16 macroblocks, slice group P3 needs to be made of at least 2 slices, denoted as FMO 3 and 4 in figure 5b. In this example, data partitioning thus leads to the creation of 10 NAL units, as depicted in figure 5b, instead of 8 NAL units in the previous examples.

It must be emphasized that all these depicted examples are not limitative and that other situations may be envisaged, including combinations of these aforementioned examples

With respect to the prior art such a partitioning allows to selectively discard NAL units containing the less important residual data of inter-coded macroblocks in order to limit the visual distortion, and/or to keep the optimal intra/inter coding decision at the macroblock level during the step of the sorting/classification. Moreover the amount of discardable data can now be adjusted on a frame per frame basis since partitions are made of several NAL units, related to several macroblocks of the same category.

It is further to be remarked that, although embodiments have been described with reference to the H.264/AVC video coding standard, that other embodiments are possible, using other types of coding and data partitioning than the one proposed in this particular standard.

The thus described method solves the problems associated with the prior art solution which consisted of adding a certain amount of Intra-coded MacroBlocks Randomly in inter-predicted slices (IMBR encoding option). At a given encoding bitrate, increasing the IMBR value indeed decreases the amount of intercoded macroblocks and thus the size of partition C (in favor of Partition B). If the bitstream is adapted by removing the partition C, this decreases the amount of missing residual information (after inter-prediction based on Partition A data). Moreover the propagation of errors due to inter-prediction may also be limited by increasing the frequency of I frames in the bitstream. This prior art procedure however turned out to be inefficient with respect to the following criteria: visual impact of partition C loss, rate-distortion performance and adaptivity of the amount of discardable data. This can be understood from the following: The choice of macroblocks that are forced to be intra-coded instead of inter-coded is randomly done, irrespectively of the visual importance of each macroblock. Forcing the introduction of additional intra-coded macroblocks (via the IMBR option or additional I frames) prevents the encoder to make coding choice optimizing its rate-distortion performance. At a fixed encoding bitrate, increasing the number of additional intra-coded macroblocks has thus a negative impact on the video quality. The introduction of additional intra-coded macroblocks allows one to have control on the size of Partitions (essentially B and C). This is useful in order to limit the impact of Partition C losses when the size of Partition C is larger than required by the application. In the case of traffic adaptation, the Partition C could indeed be larger than the bitrate savings required in case of congestion. However the IMBR method statically fixes the size of partition C, while in practice the severity of congestion may vary over time and thus ideally requires to adaptively set the amount of data to be discarded.

To solve these problems the method according to the present invention thus brought an elegant solution. A yet alternative solution can consist of improving the IMBR approach by optimizing in the encoder the selection of the additional macroblock to be intra-coded. Instead of a random selection, one may choose to intra-code in priority either the macroblock whose loss would have the strongest impact on the quality of the decoded video or the macroblock that that would have the largest inter-prediction residuals. This second option lowers the burden on coding efficiency as it forces to intra-code the macroblock that are the least efficiently coded via inter-prediction.

While this may lead to variant algorithms, in practice both selection options will lead to a similar selection of macroblocks, as the macroblock with a large inter-prediction residual are typically the ones that would heavily contribute the visual distortion in case of Partition C loss.

A possible implementation of the second option may for instance consist of, when choosing the coding mode for a macroblock, an encoder compares Intra_Res, being the size of the residual data after intr-prediction of the macroblock, with Inter_Res, the size of the residual data after inter-prediction. The macroblock is then intra-coded if Intra_Res < Inter_Res, and intercoded otherwise. If one wants to increase the amount of intra-coded macroblocks, the above constraint may be slightly relaxed such as to intra-code a macroblock if Intra_res < β.Inter_res, with β being a number larger than 1 and chosen so as to obtain the desired number of additional intra-coded macroblocks over the slice.

Until now only the method has been described. The present invention relates as well to an encoder for implementing this method as well. In some embodiments the encoder itself is adapted to discard itself part of the NAL unit partitions, in case of congestion during transmission. In other embodiments the encoder is adapted to transmit all NAL unit partitions, and it is an intermediate node of a network, such as a router, DSL access multiplexer, wireless concentrator device or intermediate node of a wireless network which can implement part of this method, in particular the discarding step of the specific NAL unit partitions as received from an encoder in accordance with the present invention. In other embodiments even a receiver may be adapted to discard this part of the NAL unit partitions. A person skilled in the art is knowledgeable about possible implementations for realizing the specific steps of the method, as explained in previous paragraphs of this document. Therefore specific embodiments of such an encoder, transmitter, intermediate node , receiver and a decoder for decoding data encoded in accordance with the method will not be further described but may be implemented either in hardware and/or software, by processor means, as a computer programme etc. as is well known by a person skilled in the art

While the principles of the invention have been described above in connection with specific apparatus, it is to be clearly understood that this description is made only by way of example and not as a limitation on the scope of the invention, as defined in the appended claims.

## Claims

1. Method for encoding video data, said method includes a step of selecting between inter-prediction and intra-prediction mode, whereby, if interprediction mode is selected, said method further includes a further step of sorting at least one type of inter-prediction macroblocks into different categories, in accordance with a predetermined criterion, and a step of arranging all macroblocks of said at least one type and pertaining to the same category into one slice group, thereby creating a set of slice groups for this type of interprediction macroblocks.

2. Method according to claim 1 wherein said predetermined criterion is related to the size of the residual data contained within the encoded inter-predicted macroblock, or related to the importance of this residual data on the visual quality of the reconstructed video at the decoding side.

3. Method according to claim 1 or 2, wherein said method includes an additional step of data partitioning the slices of the slice groups of said set into several NAL unit partitions for further transmission over a communications network.

4. Method according to claim 3 further including a step of, during transmission of said set of several NAL unit partitions, possibly discarding at least one partition of at least one of said slice groups of said set, in accordance to a second predetermined criterion related to said predetermined criterion.

5. Encoding apparatus for encoding video data, said encoding apparatus being adapted to select between inter-prediction and intra-prediction mode, and in case that inter-prediction mode is selected, to sort at least one type of inter-prediction macroblocks into different categories, in accordance with a predetermined criterion, and to arrange all macroblocks of said at least one type and pertaining to the same category into one slice group, thereby creating a set of slice groups for this type of interprediction macroblocks.

6. Encoding apparatus according to claim 5 wherein said predetermined criterion is related to the size of the residual data contained within the encoded inter-predicted macroblock, or related to the importance of this residual data on the visual quality of the reconstructed video at the decoding side.

7. Encoding apparatus according to claim 5 or 6, further being adapted to perform data partitioning on the slices of the slice groups of said set into several NAL unit partitions for further transmission over a communications network.

8. Transmitter for transmitting encoded video data, said transmitter including an encoding apparatus according to any of the claim 5 to 7.

9. Transmitter according to claim 8, further being adapted to before transmission, possibly discard at least one partition of at least one of said slice groups of said set, in accordance to a second predetermined criterion related to said predetermined criterion.

10. Intermediate node of a communications network, being adapted to receive NAL unit partitions from an encoding apparatus in accordance to claim 7, and further being adapted to possibly discard at least one partition of at least one of said slice groups of said set, in accordance to a second predetermined criterion related to said predetermined criterion.

11. Intermediate node of a communications network, being adapted to receive NAL unit partitions from a transmitter according to claim 8 and further being adapted to possibly discard at least one partition of at least one of said slice groups of said set, in accordance to a second predetermined criterion related to said predetermined criterion..

12. Receiver for receiving encoded video data from a transmitter in accordance with claim 8, and further being adapted to possibly discard at least one partition of at least one of said slice groups of said set, in accordance to a second predetermined criterion related to said predetermined criterion.

13. Decoder apparatus for decoding encoded video data being encoded in accordance with any of the claims 1 to 4.
